# EUROPÄISCHE PATENTSCHRIFT

(11) **EP 3 594 052 B1**
(45) Veröffentlichungstag und Bekanntmachung des Hinweises auf die Patenterteilung: **11.05.2022**
(21) Anmeldenummer: 19185426.4
(22) Anmeldetag: 10.07.2019
(51) Int. Cl.: B60N 2/02

(54) **FAHRZEUGSITZ MIT SITZBEDIENUNGSEINRICHTUNG**
VEHICLE SEAT WITH SEAT CONTROL DEVICE
SIÈGE DE VÉHICULE POURVU DE DISPOSITIF DE COMMANDE DE SIÈGE

(30) Priorität: 13.07.2018 DE 102018117006
(43) Veröffentlichungstag der Anmeldung: 15.01.2020
(73) Patentinhaber: GRAMMER AG, 92289 Ursensollen (DE)
(72) Erfinder: Kolb, Jens, 92281 Königstein (DE)
(74) Vertreter: Hannke, Christian

(56) Entgegenhaltungen:
- EP-A1- 2 735 469
- EP-A1- 3 040 245
- EP-A1- 3 263 392
- DE-A1- 19 725 175
- DE-A1-102011 081 098
- DE-A1-102016 011 307
- US-A1- 2017 015 217

## Beschreibung

Die Erfindung betrifft einen Fahrzeugsitz mit einer Sitzbedienungseinrichtung.

Es sind aus dem Stand der Technik Sitzbedienungseinrichtungen bekannt, welche insbesondere mechanische Betätigungselemente wie Schalter, Knöpfe, Tasten oder dergleichen aufweisen, welchen jeweils eine bestimmte Funktion zugewiesen ist, beispielsweise Erhöhung und Erniedrigung der Luftmenge in einer Luftfeder des Fahrzeugsitzes.

Aufgrund der Verwendung von mechanischen Betätigungselementen sind eine Vielzahl von Betätigungselementen notwendig, um die vorgesehenen Sitzeinstellmöglichkeiten abzudecken und entsprechend verändern zu können.

EP 3 263 392 A1 betrifft ein Verfahren zum Verstellen eines ersten Sitzelements eines Fahrzeugsitzes, bei dem auf einer Anzeigefläche ein Graphikelement des Fahrzeugsitzes mit einem Graphikelement des ersten Sitzelements angezeigt wird, zum Verstellen des ersten Sitzelements ein erstes und ein zweites Schaltelement auf der Anzeigefläche angezeigt werden, wobei das erste Schaltelement ein erstes und das zweite Schaltelement ein zweites graphisches Pfeilelement umfassen, welche entgegengesetzte Richtungen zum Bewegen des ersten Sitzelements auszeichnen, und beim Betätigen des ersten Schaltelements ein Steuersignal erzeugt wird, durch welches das erste Sitzelement in einer ersten Richtung bewegt wird und das Graphikelement des ersten Sitzelements bewegt wird. EP 3 040 245 A1 betrifft eine Vorrichtung sowie ein Verfahren zur Unterstützung eines Anwenders vor einer Bedienung eines Schalters zur elektromotorischen Verstellung eines Teils eines Fortbewegungsmittels. Das Verfahren umfasst die Schritte:
- Erkennen einer Annäherung des Anwenders an einen ersten Schalter und im Ansprechen darauf
- Anzeigen eines Hinweises zu einer dem ersten Schalter zugeordneten Funktion.

Es ist demzufolge Aufgabe der vorliegenden Erfindung, die Anzahl der Betätigungselemente zu reduzieren und eine einfachere und kompaktere Einstellbarkeit der jeweiligen Fahrzeugfunktionen bereitzustellen.

Gelöst wird diese Aufgabe gemäß den Merkmalen des Patentanspruches 1.

Ein wesentlicher Punkt der Erfindung liegt darin, einen Fahrzeugsitz mit einer Sitzbedienungseinrichtung bereitzustellen, wobei die Sitzbedienungseinrichtung einen Berührbildschirm zum Anzeigen von Bedienfeldern zum Einstellen eines Wertes eines dem jeweiligen Bedienfeld zugeordneten Bedienparameters und zum Erfassen einer Benutzereingabe aufweist, wobei mittels einer ersten Benutzereingabe zwischen Bedienfeldern umschaltbar ist, wobei die Bedienfelder in einer festen Reihenfolge angeordnet sind, wobei jeweils ein einziges Bedienfeld durch den Berührbildschirm angezeigt ist und durch eine zweite Benutzereingabe des Bedienfelds der Wert des Bedienparameters veränderbar ist. Erfindungsgemäß ist jedem Bedienfeld lediglich ein Bedienparameter zugeordnet.

Insbesondere ist die Sitzbedienungseinrichtung mit dem Fahrzeugsitz verbunden.

Erfindungsgemäß wird mittels des Berührbildschirms, immer genau ein Bedienfeld angezeigt, mittels welchem durch eine erste Benutzereingabe der Wert eines dem Bedienfeld zugeordneten Bedienparameters verändert werden kann.

Als Beispiele für ein Bedienfeld sind eine Sitzhöheneinstellung, sowie eine vertikale Sitzdämpfung, eine Sitzlängsverstellung, eine Rückenlehnenneigung, und eine Sitzneigung genannt. Entsprechendes wird durch das Bedienfeld auf dem Berührbildschirm angezeigt.

Erfindungsgemäß wird durch ein Bedienfeld lediglich eine Einstellmöglichkeit dargestellt, also beispielsweise durch ein erstes Bedienfeld die Sitzhöhenverstellung, durch ein zweites Bedienfeld die Sitzdämpfung, usw. Weiter erfindungsgemäß kann zwischen den jeweiligen Bedienfeldern durch eine erste Benutzereingabe umgeschaltet werden, das heißt gewechselt werden. Weiter erfindungsgemäß sind dabei die Bedienfelder in einer festen Reihenfolge angeordnet, das heißt, dass die Bedienfelder in einem bestimmten Muster nacheinander angezeigt werden, wobei die Reihenfolge bei Bedarf erweitert werden kann und insbesondere die Reihenfolge vor Benutzung geändert werden kann, entsprechend den Bedürfnissen des Fahrzeugführers.

Eine feste Reihenfolge ist dahingehend vorteilhaft, dass der Fahrzeugführer durch die mindestens eine erste Benutzereingabe ohne Blickkontakt zwischen den Bedienfeldern wechseln kann und nach einer bestimmten Anzahl von ersten Benutzereingaben das gewünschte Bedienfeld erreicht.

Nachdem ein Bedienfeld angewählt wurde, kann mittels von der mindestens einen zweiten Benutzereingabe der Wert des dem Bedienfeld zugeordneten Bedienparameters verändert werden.

Insbesondere sind die erste und die zweite Benutzereingabe voneinander verschieden.

Gemäß einer bevorzugten Ausführungsform ist die erste Benutzereingabe eine Wischbewegung. Insbesondere handelt es sich bei dieser Wischbewegung um eine Bewegung auf dem Bildschirm, besonders vorteilhaft entlang einer horizontalen Linie des Bildschirms, also einfach gesprochen um eine Bewegung von links nach rechts oder umgekehrt.

Gemäß einer weiteren bevorzugten Ausführungsform ist die zweite Benutzereingabe eine Tippbewegung. Dazu weist insbesondere das Bedienfeld einen oder mehrere sensitive Tastenbereiche auf. Wird eine Tippbewegung auf einem der Tastenbereiche ausgeführt, so wird der Bedienparameter abhängig von dieser Eingabe verändert.

Gemäß einer weiteren bevorzugten Ausführungsform umfasst die Sitzbedienungseinrichtung einen Aktivierungsknopf, wobei durch Betätigung des Aktivierungsknopfes ein erstes Aktivierungssignal an den Berührbildschirm versendbar ist, wodurch der Berührbildschirm entsperrbar ist und auf dem Berührbildschirm ein erstes Bedienfeld ausgewählt aus der Gruppe der Bedienfelder angezeigt ist. Ein Aktivierungsknopf ist vor allem dann vorteilhaft, wenn der Berührbildschirm und entsprechend die Bedienfelder in Umgebungen angeordnet ist, in welchen eine unbeabsichtigte Berührung bzw. Betätigung durch den Fahrzeugführer nicht ausgeschlossen werden kann.

Ist der Berührbildschirm jedoch in einer Umgebung angeordnet, in welcher eine derartige unbeabsichtigte Betätigung durch den Fahrzeugführer ausgeschlossen oder nahezu ausgeschlossen werden kann, so kann auf einen Aktivierungsknopf verzichtet werden, und die Sitzbedienungseinrichtung ist zumindest während einer Benutzung des Fahrzeugs bzw. des Fahrzeugsitzes aktiv. Der Berührbildschirm ist derart angeordnet, dass eine unbeabsichtigte Betätigung ausgeschlossen ist.

Beispielsweise kann dabei der Berührbildschirm in wenig oder nicht benutzten Flächen des Fahrzeugsitzes oder einer Fahrzeugkabine angeordnet sein. Es ist auch denkbar, dass der Berührbildschirm in Oberflächen des Fahrzeugsitzes vertieft, abgesetzt oder auch eben eingelassen angeordnet sein kann. Durch die vertiefte Einlassung kann eine unbeabsichtigte Betätigung, beispielsweise in einer Armlehne, durch einen Arm oder dergleichen des Fahrzeugführers verhindert werden. Gleiches gilt ebenso für eine abgesetzte oder ebene Einlassung.

Der Aktivierungsknopf kann dabei als ein Teil des Berührbildschirms ausgebildet sein. Insbesondere ist der Aktivierungsknopf haptisch von dem sensitiven Bereich des Berührbildschirms unterscheidbar. Bei dem Aktivierungsknopf kann es sich um einen mechanischen Knopf oder Schalter handeln, wobei aber auch denkbar ist, dass der Aktivierungsknopf ebenso einen sensitiven Bereich aufweist.

Gemäß einer weiteren bevorzugten Ausführungsform ist die Sitzbedienungseinrichtung ständig aktiviert, wobei der Berührbildschirm ständig beleuchtet ist. Im Sinne der Erfindung bedeutet hierbei ständig aktiviert, dass die Sitzbedienungseinrichtung aktiv ist, solange das Fahrzeug und/oder der Fahrzeugsitz aktiv genutzt wird. Ist das Fahrzeug deaktiviert oder der Fahrzeugsitz nicht belegt, so ist ebenso die Sitzbedienungseinrichtung deaktiviert.

Gemäß einer alternativen bevorzugten Ausführungsform ist nach Betätigen des Aktivierungsknopfes der Berührbildschirm beleuchtet.

Beleuchtet bedeutet hierbei, dass beispielsweise der Berührbildschirm eine Hintergrundbeleuchtung aufweist, um den Berührbildschirm zu illuminieren.

Gemäß einer weiteren bevorzugten Ausführungsform weist die Sitzbedienungseinrichtung eine elektronische Steuereinheit, mittels welcher das auf dem Berührbildschirm angezeigte Bedienfeld mit dem zu dem Bedienfeld und dem entsprechenden Bedienparameter zugehörigen Aktuator zumindest signaltechnisch verknüpft ist.

Dies bedeutet beispielsweise, dass durch eine Benutzereingabe an dem Berührbildschirm ein entsprechendes erstes Steuersignal an die elektronische Steuereinheit übertragen wird, wobei mittels der Steuereinheit ein entsprechendes zweites Steuersignal an den Aktuator übermittelt wird, um den Aktuator entsprechend der Benutzereingabe anzusteuern.

Insbesondere ist der Aktivierungsknopf ebenso mit der Steuereinheit verbunden, wobei es denkbar ist, dass durch die Betätigung des Aktivierungsknopfes das erste Aktivierungssignal mittels der Steuereinheit an den Berührbildschirm übermittelt wird.

Gemäß einer weiteren bevorzugten Ausführungsform ist nach einem Umschalten zwischen Bedienfeldern nach einer vorbestimmten ersten Zeitdauer ein Kennsignal von dem Berührbildschirm zu der Steuereinheit übermittelbar, wobei nach Erhalt des Kennsignals an der Steuereinheit ein zweites Aktivierungssignal an den zu dem Bedienfeld gehörenden Aktuator versendet ist, um den Aktuator kurzzeitig zu aktivieren.

Das bedeutet, dass nach einer Auswahl eines Bedienfeldes und nach einer vorbestimmten ersten Zeitdauer ein Kennsignal von dem Berührbildschirm zu der Steuereinheit übermittelt wird, wobei mittels des Kennsignals der Steuereinheit mitgeteilt wird, welches Bedienfeld aktuell ausgewählt ist. Nachdem die Steuereinheit dieses Kennsignal empfangen hat und mitgeteilt wurde, welches Bedienfeld ausgewählt ist, übermittelt die Steuereinheit das zweite Aktivierungssignal an den zu dem ausgewählten Bedienfeld zugehörigen Aktuator, wodurch der Aktuator kurzzeitig aktiviert wird.

Unter kurzzeitig ist hierbei eine Zeitdauer von weniger als 5 Sekunden, bevorzugter von weniger als 2 Sekunden und besonders bevorzugt von höchstens 1 Sekunde und mehr bevorzugt von höchstens 0,5 Sekunden zu verstehen.

Durch diese kurzzeitige Aktivierung wird ein zusätzliches Feedback für den Fahrzeugführer geschaffen, so dass dieser ohne einen Blickkontakt auf den Berührbildschirm erkennen kann, welches Bedienfeld aktuell ausgewählt ist und insbesondere welcher Bedienparameter dadurch einstellbar ist.

Gemäß einer weiteren bevorzugten Ausführungsform ist es vorteilhaft, wenn nach einer vorbestimmten zweiten Zeitdauer durch die Steuereinheit ein Deaktivierungssignal an den Berührbildschirm gesendet ist, wodurch der Berührbildschirm automatisch deaktivierbar ist. Das bedeutet, dass falls der Fahrzeugführer keine Einstellungen mehr machen möchte oder bereits alle Einstellungen am Fahrzeugsitz vorgenommen hat, der Berührbildschirm automatisch deaktiviert wird und daher nicht unabsichtlich betätigt werden kann. Insbesondere muss der Fahrzeugführer auch keine manuelle Deaktivierung des Berührbildschirms vornehmen, so dass ein erhöhter Komfort in der Bedienung der Sitzbedienungseinrichtung gewährleistet werden kann.

Die zweite Zeitdauer beträgt dabei vorzugsweise höchstens 5 Minuten, bevorzugter 2 Minuten und besonders bevorzugt höchstens 1 Minute.

Gemäß einer weiteren bevorzugten Ausführungsform ist nach einer vorbestimmten dritten Zeitdauer durch die Steuereinheit ein Rückstellsignal an den Berührbildschirm gesendet worden, wodurch das zuerst angezeigte Bedienfeld angezeigt wird.

Nach Aktivierung der Sitzbedienungseinrichtung, unabhängig davon wie diese aktiviert wurde, wird zunächst ein erstes Bedienfeld an dem Berührbildschirm angezeigt. Durch Verstellung bzw. dem Umschalten zwischen den Bedienfeldern kann es vorkommen, dass der Fahrzeugführer vergessen hat, welche Funktion zuletzt eingestellt wurde. Es ist daher sinnvoll, dass nach der dritten Zeitdauer wieder das zuerst angezeigte Bedienfeld angezeigt wird mittels Übersendung des Rückstellsignals an den Berührbildschirm.

Die dritte Zeitdauer beträgt dabei bevorzugt mindestens eine Minute, bevorzugt mindestens 2 Minuten, weiter bevorzugt mindestens 5 Minuten und besonders bevorzugt mindestens 10 Minuten.

Insbesondere können die erste sowie die zweite Zeitdauer ab Auswahl eines Bedienfeldes beginnen.

Gemäß einer weiteren bevorzugten Ausführungsform ist der Berührbildschirm in oder an einer Armlehne des Fahrzeugsitzes oder in einem Sitzteil des Fahrzeugsitzes angeordnet.

Insbesondere ist vorgesehen, den Berührbildschirm in einem Bereich anzuordnen, welcher nur wenig belastet oder ansonsten nicht genutzt ist. Beispiele hierfür sind ein wenig belasteter Bereich einer Armlehne, oder ein vorderer, mittiger Bereich des Sitzteils, also zwischen den beiden Beinen des Fahrzeugführers angeordnet.

Gelöst wird die zugrunde liegende Aufgabe auch durch ein Verfahren, umfassend die Schritte:
(a) Aktivieren einer Sitzbedienungseinrichtung durch Betätigung eines Aktivierungsknopfes und Anzeigen eines ersten Bedienfeldes auf einem Berührbildschirm, wobei das erste Bedienfeld ausgewählt ist aus einer Gruppe von verschiedenen Bedienfeldern;
(b) Verwenden des ersten Bedienfeldes oder Auswahl eines zweiten Bedienfeldes durch mindestens eine erste Benutzereingabe und Anzeigen des zweiten Bedienfeldes auf dem Berührbildschirm;
(c) Verändern eines Wertes eines dem ersten oder zweiten Bedienfeld zugeordneten Bedienparameters durch mindestens eine zweite Benutzereingabe.

Erfindungsgemäß sind die Bedienfelder in einer festen Reihenfolge angeordnet und jedem Bedienfeld ist lediglich ein Bedienparameter zugeordnet.

Weiter vorteilhaft handelt es sich um eine Sitzbedienungseinrichtung wie zuvor beschrieben.

Alternativ wird die Aufgabe weiter gelöst durch einen Fahrzeugsitz mit einer Sitzbedienungseinrichtung, wobei die Sitzbedienungseinrichtung einen Berührbildschirm zum Anzeigen von Bedienfeldern zum Einstellen eines Wertes eines dem jeweiligen Bedienfeld zugeordneten Bedienparameters und zum Erfassen von Benutzereingaben aufweist, wobei mittels mindestens einer ersten Benutzereingabe zwischen Bedienfeldern umschaltbar ist, wobei die Bedienfelder in einer festen Reihenfolge angeordnet sind, wobei jeweils ein einziges Bedienfeld durch den Berührbildschirm angezeigt ist und durch mindestens eine zweite Benutzereingabe über mindestens einen Eingabeknopf des Fahrzeugsitzes der Wert des Bedienparameters veränderbar ist. Erfindungsgemäß ist jedem Bedienfeld lediglich ein Bedienparameter zugeordnet.

Der mindestens eine Eingabeknopf ist hierbei derart mit dem Berührbildschirm signaltechnisch verbunden, dass durch Betätigung des Eingabeknopfes der Wert des Bedienparameters abhängig von der Betätigung des Eingabeknopfes verändert werden kann.

Weiter ist es auch in einer Ausführung, die nicht Teil der Erfindung ist, denkbar, dass nicht nur ein einziger Wert des Bedienfeldes veränderbar ist, sondern zwei, drei oder sogar vier Werte.

Beispielsweise ist es vorstellbar, dass sowohl die Sitzhöhe als auch die Sitzlängsverstellung abhängig oder unabhängig voneinander veränderbar sind.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den Zeichnungen zu entnehmen. Hierbei zeigen:
- Fig. 1: eine Sitzbedienungseinrichtung gemäß einer bevorzugten Ausführungsform;
- Fig. 2: Umschalten zwischen den Bedienfeldern;
- Fig. 3A: eine erste Anordnung des Berührbildschirms;
- Fig. 3B: eine zweite Anordnung des Berührbildschirms;
- Fig. 3C: eine dritte Anordnung des Berührbildschirms;
- Fig. 4: alternative Anzeige eines Bedienfeldes gemäß einer Ausführung, die nicht Teil der Erfindung ist;
- Fig. 5: eine Ausführungsform der Sitzbedienungseinrichtung.

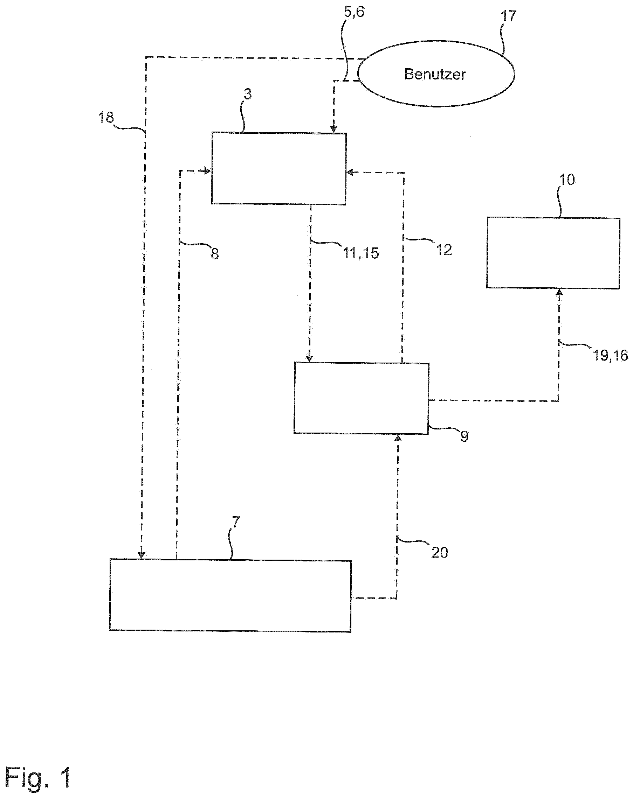

Die Figur 1 zeigt eine Sitzbedienungseinrichtung 2 gemäß einer besonders bevorzugten Ausführungsform. Dabei ist auch erkennbar, wie die jeweiligen Komponenten untereinander signaltechnisch verbunden sind.

Wie zu erkennen ist, umfasst die Sitzbedienungseinrichtung 2 einen Berührbildschirm 3, eine Steuereinheit 9, einen Aktivierungsknopf 7 und mindestens einen Aktuator 10.

Mittels eines Benutzers 17 kann mittels von Benutzereingaben 5, 6 eine Eingabe auf dem Berührbildschirm 3 getätigt werden. Abhängig davon, wie diese Benutzereingabe ausgebildet ist, wird eine andere Funktion gesteuert. Handelt es sich bei der Benutzereingabe um eine erste Benutzereingabe 5, so führt der Benutzer 17 vorzugsweise eine Wischbewegung aus. Handelt es sich bei der Benutzereingabe um eine zweite Benutzereingabe 6, so führt der Benutzer 17 vorzugsweise eine Tippbewegung aus.

Aufgrund einer Betätigung 18 des Aktivierungsknopfes 7 wird ein erstes Aktivierungssignal 8 an den Berührbildschirm 3 übermittelt, wodurch der Berührbildschirm 3 entsperrt, also aktiviert wird und auf dem Berührbildschirm 3 ein Bedienfeld 4 (hier nicht gezeigt) angezeigt wird.

Aufgrund von Benutzereingaben 5, 6 des Benutzers 17 auf dem Berührbildschirm 3 wird ein erstes Steuersignal 15 von dem Berührbildschirm 3 an die Steuereinheit 9 übermittelt. Der Steuereinheit 9 wird dadurch mitgeteilt, um welche Benutzereingabe 5, 6 es sich handelt und wie oft oder in welchem Umfang eine derartige Benutzereingabe 5, 6 getätigt wird.

Weiter kann nach einem Umschalten zwischen Bedienfeldern 4 ein Kennsignal 11 von dem Berührungsbildschirm 3 an die Steuereinheit 9 übermittelt werden, insbesondere nach einer vorbestimmten ersten Zeitdauer, wobei nach Erhalt des Kennsignals 11 an der Steuereinheit ein zweites Aktivierungssignal 19 an den zu dem ausgewählten Bedienfeld 4 gehörenden Aktuator 10 versendet werden, um diesen Aktuator 10 kurzzeitig zu aktivieren und dem Benutzer so eine haptische Rückmeldung über das momentan ausgewählte Bedienfeld 4 beziehungsweise dem momentan einzustellendem Bedienparameter zu übermitteln.

Es ist auch denkbar, dass nur eine Verbindung der Steuereinheit 9 mit dem Aktuator 10 hergestellt wird und basierend auf den entsprechenden zweiten Benutzereingaben eine Ansteuerung des Aktuators 10 durch die Steuereinheit 9 durchgeführt wird.

Darüber hinaus ist es denkbar, dass bei einer Betätigung 18 des Aktivierungsknopfes 7 ein Prüfsignal 20 von dem Aktivierungsknopf 7 an die Steuereinheit 9 übermittelt wird, um eine Überprüfung durchführen zu können bei Übermittelung eines Signals, insbesondere eines ersten Steuersignals 15 von dem Berührbildschirm 3 an die Steuereinheit 9, wobei durch die Überprüfung feststellbar ist, ob das erste Steuersignal 15 tatsächlich von dem Berührbildschirm 3 stammt oder nicht.

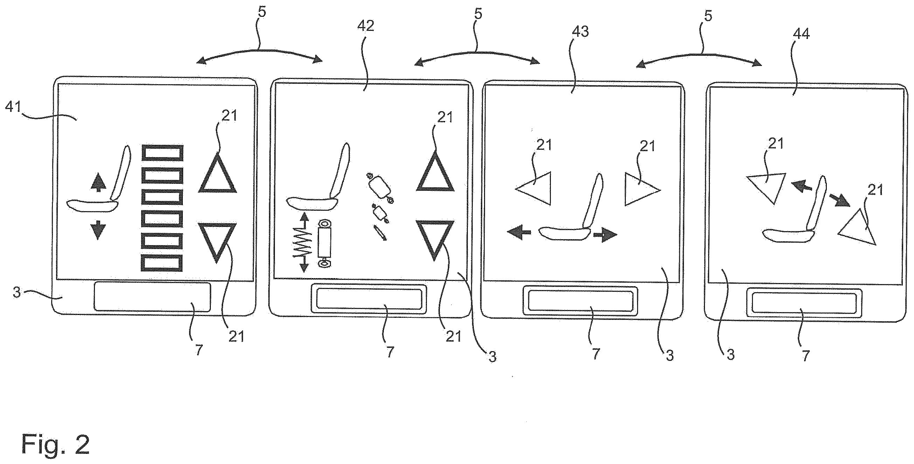

Die Figur 2 zeigt einen Wechsel beziehungsweise ein Umschalten zwischen verschiedenen Bedienfeldern 4, wobei ein erstes Bedienfeld 41, ein zweites Bedienfeld 42, ein drittes Bedienfeld 43 und ein viertes Bedienfeld 44 zu erkennen sind. Natürlich können auch weniger Bedienfelder 4 oder mehr Bedienfelder 4 vorhanden sein, wobei zumindest zwei Bedienfelder 4 vorteilhaft sind.

Wie weiter zu erkennen ist, sind die Bedienfelder 4, 41, 42, 43, 44 mittels eines Berührbildschirms 3 angezeigt, wobei vorliegend der Aktivierungsknopf 7 als ein Teil des Berührbildschirms 3 ausgestaltet ist.

Durch das erste Bedienfeld 41 wird eine Sitzhöhenverstellung angezeigt, durch das zweite Bedienfeld 42 eine vertikale Sitzdämpfung, durch das dritte Bedienfeld 43 eine Sitzlängsverstellung und durch das vierte Bedienfeld 44 eine Rückenlehnenneigung.

Weiter ist in der Figur 2 zu erkennen, dass die jeweiligen Bedienfelder 4, 41, 42, 43, 44 mindestens einen sensitiven Bereich 21, insbesondere einen sensitiven Tastenbereich 21 aufweisen, wobei bei einer zweiten Benutzereingabe 5, insbesondere einer Tippbewegung, auf einen Tastenbereich 21 eine entsprechende Veränderung des Bedienparameters vorgenommen wird.

Weiter ist zu erkennen, dass mittels von ersten Benutzereingaben 5 zwischen den Bedienfeldern 4, 41, 42, 43, 44 hin-und hergewechselt werden kann, wobei die erste Benutzereingabe 5 vorliegend eine Wischbewegung ist.

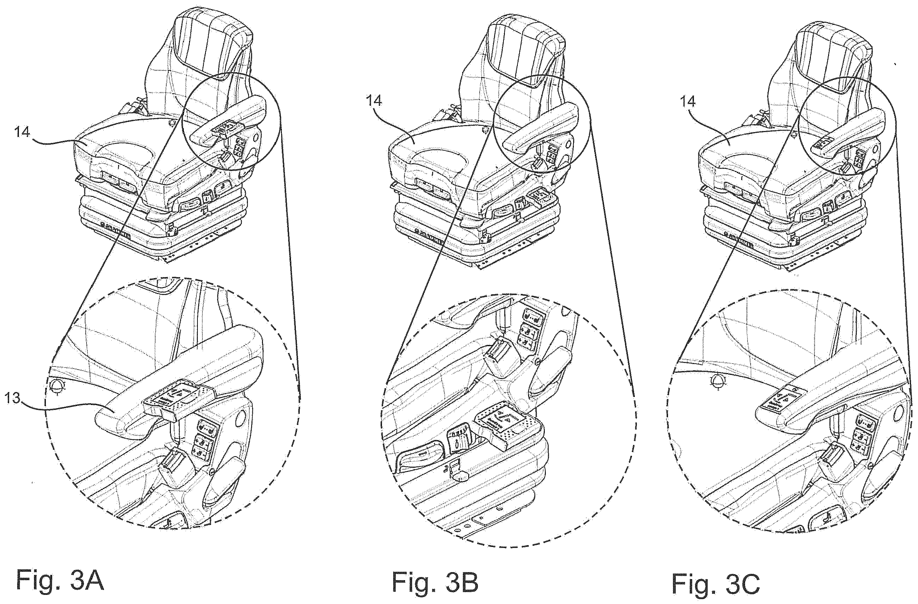

Es ist auch denkbar, dass die zweite Benutzereingabe 6 ebenso eine Wischbewegung ist. Die Figuren 3A, 3B und 3C zeigen darüber hinaus verschiedene Anbringungsmöglichkeiten des Berührbildschirms 3 mit oder an einem Fahrzeugsitz 1, wie nachfolgend genauer dargestellt.

In der Figur 3A ist der Berührbildschirm 3 an einer Armlehne 13 angeordnet, insbesondere an einer seitlichen Fläche 22 der Armlehne 13.

In der Figur 3B ist der Berührbildschirm 3 an einem Sitzteil 14 angeordnet, insbesondere auf einer seitlichen Fläche des Sitzteils 14, und besonders bevorzugt unterhalb der Armlehne 13. In der Figur 3C ist der Berührbildschirm 3 in der Armlehne 13 integriert, wobei es denkbar ist, dass der Berührbildschirm 3 in der Armlehne abgesenkt ist, so dass ein Fahrzeugführer nicht davon gestört wird.

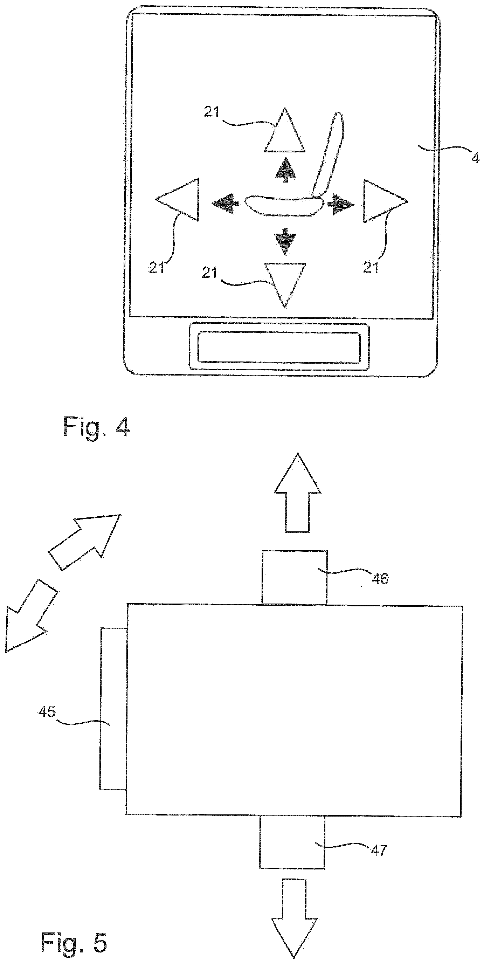

Gemäß eine Ausführung, die nicht Teil der Erfindung ist, zeigt die Figur 4 eine alternative Darstellung eines Bedienfeldes 4, in welchem Werte von zwei verschiedenen Bedienparametern einstellbar sind. Vorliegend handelt es sich hierbei um eine Sitzhöheneinstellung, dargestellt durch die Pfeile nach oben und nach unten, und eine Sitzlängsverstellung, dargestellt durch die Pfeile nach links und nach rechts.

Die Figur 5 zeigt eine weitere Ausführungsform der Sitzbedienungseinrichtung 2, wobei verschiedene Eingabeknöpfe 45, 46, 47 zu erkennen sind, wobei beispielsweise ein erster Eingabeknopf 45 vorgesehen ist zum Einstellen einer Sitzneigung, ein zweiter Eingabeknopf 46 zum Erhöhen der Sitzhöhe und ein dritter Eingabeknopf 47 zum Reduzieren der Sitzhöhe. Die Funktionen sind beispielhaft durch die jeweiligen Pfeile dargestellt.

### Bezugszeichenliste

- 1: Fahrzeugsitz
- 2: Sitzbedienungseinrichtung
- 3: Berührbildschirm
- 4: Bedienfeld
- 5: erste Benutzereingabe
- 6: zweite Benutzereingabe
- 7: Aktivierungsknopf
- 8: erstes Aktivierungssignal
- 9: Steuereinheit
- 10: Aktuator
- 11: Kennsignal
- 12: Deaktivierungssignal
- 13: Armlehne
- 14: Sitzteil
- 15: erstes Steuersignal
- 16: zweites Steuersignal
- 17: Benutzer
- 18: Betätigung
- 19: zweites Aktivierungssignal
- 20: Prüfsignal
- 21: sensitiver Bereich
- 22: seitliche Fläche
- 41: erstes Bedienfeld
- 42: zweites Bedienfeld
- 43: drittes Bedienfeld
- 44: viertes Bedienfeld
- 45: Eingabeknopf
- 46: Eingabeknopf
- 47: Eingabeknopf

## Patentansprüche

1. Fahrzeugsitz (1) mit einer Sitzbedienungseinrichtung (2), wobei die Sitzbedienungseinrichtung (2) einen Berührbildschirm (3) zum Anzeigen von Bedienfeldern (4) zum Einstellen eines Wertes eines dem jeweiligen Bedienfeld (4) zugeordneten Bedienparameters und zum Erfassen von Benutzereingaben (5, 6) aufweist, wobei mittels mindestens einer ersten Benutzereingabe (5) zwischen Bedienfeldern (4) umschaltbar ist, wobei jeweils ein einziges Bedienfeld (4) durch den Berührbildschirm (3) angezeigt ist und durch mindestens eine zweite Benutzereingabe (6) des Bedienfelds (4) der Wert des Bedienparameters veränderbar ist,
**dadurch gekennzeichnet, dass**
die Bedienfelder (4) in einer festen Reihenfolge angeordnet sind und jedem Bedienfeld (4) lediglich ein Bedienparameter zugeordnet ist.

2. Fahrzeugsitz (1) nach Anspruch 1,
**dadurch gekennzeichnet, dass**
die erste Benutzereingabe (5) eine Wischbewegung ist.

3. Fahrzeugsitz (1) nach Anspruch 1 oder 2,
**dadurch gekennzeichnet, dass**
die zweite Benutzereingabe (6) eine Tippbewegung ist.

4. Fahrzeugsitz (1) nach einem der Ansprüche 1-3,
**dadurch gekennzeichnet, dass**
die Sitzbedienungseinrichtung (2) einen Aktivierungsknopf (7) umfasst, wobei durch Betätigung des Aktivierungsknopfes (7) ein erstes Aktivierungssignal (8) an den Berührbildschirm (3) versendbar ist, wodurch der Berührbildschirm (3) entsperrbar ist und auf dem Berührbildschirm (3) ein erstes Bedienfeld (4) ausgewählt aus der Gruppe der Bedienfelder (4) angezeigt ist.

5. Fahrzeugsitz (1) nach einem der Ansprüche 1-3,
**dadurch gekennzeichnet, dass**
die Sitzbedienungseinrichtung (2) ständig aktiviert ist, wobei der Berührbildschirm (3) ständig beleuchtet ist.

6. Fahrzeugsitz (1) nach Anspruch 4,
**dadurch gekennzeichnet, dass**
nach Betätigen des Aktivierungsknopfes (7) der Berührbildschirm (3) beleuchtet ist.

7. Fahrzeugsitz (1) nach einem der Ansprüche 1-6,
**dadurch gekennzeichnet, dass**
die Sitzbedienungseinrichtung (2) eine elektronische Steuereinheit (9) aufweist, mittels welcher das auf dem Berührbildschirm (3) angezeigte Bedienfeld (4) mit dem zu dem Bedienfeld (4) und dem entsprechenden Bedienparameter zugehörigen Aktuator (10) zumindest signaltechnisch verknüpft ist.

8. Fahrzeugsitz (1) nach Anspruch 7,
**dadurch gekennzeichnet, dass**
nach einem Umschalten zwischen Bedienfelder (4) nach einer vorbestimmten ersten Zeitdauer ein Kennsignal (11) von dem Berührbildschirm (3) zu der Steuereinheit (9) übermittelbar ist, wobei nach Erhalt des Kennsignals (11) an der Steuereinheit (9) ein zweites Aktivierungssignal (19) an den zu dem Bedienfeld (4) gehörenden Aktuator (10) versendet ist, um den Aktuator (10) kurzzeitig zu aktivieren.

9. Fahrzeugsitz (1) nach Anspruch 4,
**dadurch gekennzeichnet, dass**
nach einer vorbestimmten zweiten Zeitdauer durch die Steuereinheit (9) ein Deaktivierungssignal (12) an den Berührbildschirm (3) gesendet ist, wodurch der Berührbildschirm (3) automatisch deaktivierbar ist.

10. Fahrzeugsitz nach Anspruch 4,
**dadurch gekennzeichnet, dass**
nach einer vorbestimmten dritten Zeitdauer durch die Steuereinheit (9) ein Rückstellsignal an den Berührbildschirm (3) gesendet worden ist, wodurch das zuerst angezeigte Bedienfeld (4) angezeigt wird.

11. Fahrzeugsitz (1) nach einem der Ansprüche 1-10,
**dadurch gekennzeichnet, dass**
der Berührbildschirm (3) in oder an einer Armlehne (13) des Fahrzeugsitzes (1) oder in einem Sitzteil (14) des Fahrzeugsitzes (1) angeordnet ist.

12. Verfahren, umfassend die Schritte:
(a) Aktivieren einer Sitzbedienungseinrichtung (2) durch Betätigung eines Aktivierungsknopfes (7) und Anzeigen eines ersten Bedienfeldes (4) ausgewählt aus einer Gruppe von verschiedenen Bedienfeldern (4) auf einem Berührbildschirm (3), wobei die Bedienfelder (4) in einer festen Reihenfolge angeordnet sind und jedem Bedienfeld (4) lediglich ein Bedienparameter zugeordnet ist;
(b) Verwenden des ersten Bedienfeldes (4) oder Auswahl eines zweiten Bedienfeldes (4) durch mindestens eine erste Benutzereingabe (5) und Anzeigen des zweiten Bedienfeldes (4) auf dem Berührbildschirm (3);
(c) Verändern eines Wertes eines dem ersten oder zweiten Bedienfeld (4) zugeordneten Bedienparameters durch mindestens eine zweite Benutzereingabe (6).

13. Fahrzeugsitz (1) mit einer Sitzbedienungseinrichtung (2), wobei die Sitzbedienungseinrichtung (2) einen Berührbildschirm (3) zum Anzeigen von Bedienfeldern (4) zum Einstellen eines Wertes eines dem jeweiligen Bedienfeld (4) zugeordneten Bedienparameters und zum Erfassen von Benutzereingaben (5) aufweist, wobei mittels mindestens einer ersten Benutzereingabe (5) zwischen Bedienfeldern (4) umschaltbar ist, wobei jeweils ein einziges Bedienfeld (4) durch den Berührbildschirm (3) angezeigt ist und durch mindestens eine zweite Benutzereingabe (6) über mindestens einen Eingabeknopf (45, 46, 47) des Fahrzeugsitzes (1) der Wert des Bedienparameters veränderbar ist,
**dadurch gekennzeichnet, dass**
die Bedienfelder (4) in einer festen Reihenfolge angeordnet sind und jedem Bedienfeld (4) lediglich ein Bedienparameter zugeordnet ist.

14. Fahrzeugsitz (1) nach einem der Ansprüche 1-11 oder 13,
**dadurch gekennzeichnet, dass**
die erste Benutzereingabe (5) und die zweite Benutzereingabe (6) voneinander verschieden sind.

## Claims

1. A vehicle seat (1) having a seat operating device (2), wherein the seat operating device (2) has a touch screen (3) for displaying control panels (4) for setting a value of an operating parameter assigned to the respective control panel (4) and for detecting user input (5, 6), wherein one can switch between control panels (4) by means of at least one first user input (5), wherein a single control panel (4) at a time is displayed by the touch screen (3) and the value of the operating parameter can be changed by at least one second user input (6) of the control panel (4)
**characterized in that**
the control panels (4) are arranged in a fixed sequence and only one operating parameter is assigned to each control panel (4).

2. Vehicle seat (1) according to claim 1,
**characterized in that**
the first user input (5) is a swiping movement.

3. Vehicle seat (1) according to claim 1 or claim 2,
**characterized in that**
the second user input (6) is a tapping movement.

4. Vehicle seat (1) according to any oneof claims 1 to 3,
**characterized in that**
the seat operating device (2) comprises an activation button (7), wherein by actuation of the activation button (7) a first activation signal (8) can be sent to the touch screen (3), whereby the touch screen (3) can be unlocked and a first control panel (4) selected from the group of control panels (4) is displayed on the touch screen (3).

5. Vehicle seat (1) according to any one of the claims 1 to 3,
**characterized in that**
the seat operating device (2) is constantly activated, wherein the touch screen (3) is constantly illuminated.

6. Vehicle seat (1) according to claim 4,
**characterized in that**
after pressing the activation button (7), the touch screen (3) is illuminated.

7. Vehicle seat (1) according to any oneof claims 1 to 6,
**characterized in that**
the seat operating device (2) has an electronic control unit (9) by means of which the control panel (4) displayed on the touch screen (3) is at least linked by a signal to the actuator (10) associated with the control panel (4) and the corresponding operating parameter.

8. Vehicle seat (1) according to claim 7,
**characterized in that**
after a switching between control panels (4) after a predetermined first duration, an identification signal (11) can be transmitted from the touch screen (3) to the control unit (9), wherein after receipt of the identification signal (11) by the control unit (9), a second activation signal (19) is sent to the actuator (10) associated with the control panel (4) to briefly activate the actuator (10).

9. Vehicle seat (1) according to claim 4,
**characterized in that**
after a predetermined second duration, a deactivation signal (12) has been sent to the touch screen (3) by the control unit (9), whereby the touch screen (3) is automatically deactivated.

10. Vehicle seat according to claim 4,
**characterized in that**
after a predetermined third duration a reset signal has been sent to the touch screen (3) by the control unit (9), whereby the first displayed control panel (4) is displayed.

11. Vehicle seat (1) according to any one of claims 1 to 10,
**characterized in that**
the touch screen (3) is arranged in or on an armrest (13) of the vehicle seat (1) or in a seat section (14) of the vehicle seat (1).

12. Method, comprising the steps:
(a) activating a seat operating device (2) by pressing an activation button (7) and displaying a first control panel (4) selected from a group of various control panels (4) on a touch screen (3), wherein the control panels (4) are arranged in a fixed sequence and only one operating parameter is assigned to each control panel (4);
(b) using the first control panel (4) or selecting a second control panel (4) by at least a first user input (5) and displaying the second control panel (4) on the touch screen (3);
(c) changing a value of the operating parameter assigned to the first or second control panel (4) by at least one second user input (6).

13. Vehicle seat (1) with a seat operating device (2), wherein the seat operating device (2) has a touch screen (3) for displaying control panels (4) for setting a value of the respective control panel (4) associated with the operating parameter and for detecting user inputs (5, wherein one can toggle between control panels (4) by means of at least one first user input (5), wherein case a single control panel (4) at a time is displayed by the touch screen (3) and the value of the operating parameter can be changed by at least one second user input (6) via at least one input button (45, 46, 47) of the vehicle seat (1),
**characterized in that**
the control panels (4) are arranged in a fixed sequenceand only one operating parameter is assigned to each control panel (4).

14. Vehicle seat (1) according to any one of claims 1-11 or 13,
**characterized in that**
the first user input (5) and the second user input (6) are different from each other.

## Revendications

1. Siège de véhicule (1) comportant un dispositif de commande de siège (2), le dispositif de commande de siège (2) présentant un écran tactile (3) pour l'affichage de panneaux de commande (4) pour le réglage d'une valeur d'un paramètre de commande associé au panneau de commande respectif (4) et pour la saisie d'entrées d'utilisateur (5, 6), une commutation entre des panneaux de commande (4) pouvant être effectuée au moyen d'au moins une première entrée d'utilisateur (5), un seul panneau de commande (4) à la fois étant affiché par l'écran tactile (3) et la valeur du paramètre de commande étant modifiable par au moins une deuxième entrée d'utilisateur (6) du panneau de commande (4),
**caractérisé par le fait que**
les panneaux de commande (4) sont disposés dans un ordre fixe et à chaque panneau de commande (4) uniquement un paramètre de commande est associé.

2. Siège de véhicule (1) selon la revendication 1,
**caractérisé par le fait que**
la première entrée d'utilisateur (5) est un mouvement de glissement.

3. Siège de véhicule (1) selon l'une des revendications 1 ou 2,
**caractérisé par le fait que**
la deuxième entrée d'utilisateur (6) est un mouvement de basculement.

4. Siège de véhicule (1) selon l'une des revendications 1 à 3,
**caractérisé par le fait que**
le dispositif de commande de siège (2) comporte un bouton d'activation (7), un premier signal d'activation (8) étant apte à être envoyé à l'écran tactile (3) par l'actionnement du bouton d'activation (7), ce par quoi l'écran tactile (3) est déverrouillable et, sur l'écran tactile (3), un premier panneau de commande (4) choisi dans le groupe des panneaux de commande (4) est affiché.

5. Siège de véhicule (1) selon l'une des revendications 1 à 3,
**caractérisé par le fait que**
le dispositif de commande de siège (2) est constamment activé, l'écran tactile (3) étant constamment éclairé.

6. Siège de véhicule (1) selon la revendication 4,
**caractérisé par le fait qu'**
après l'actionnement du bouton d'activation (7), l'écran tactile (3) est éclairé

7. Siège de véhicule (1) selon l'une des revendications 1 à 6,
**caractérisé par le fait que**
le dispositif de commande de siège (2) présente une unité de commande électronique (9) au moyen de laquelle le panneau de commande (4) affiché sur l'écran tactile (3) est relié au moins par une technique de signaux à l'actionneur (10) associé au panneau de commande (4) et au paramètre de commande correspondant.

8. Siège de véhicule (1) selon la revendication 7,
**caractérisé par le fait qu'**
après une commutation entre des panneaux de commande (4) après une première période de temps prédéterminée, un signal d'identification (11) est apte à être transmis de l'écran tactile (3) à l'unité de commande (9), un deuxième signal d'activation (19) étant envoyé à l'actionneur (10) appartenant au panneau de commande (4) après réception du signal d'identification (11) sur l'unité de commande (9), afin d'activer l'actionneur (10) pendant une courte durée.

9. Siège de véhicule (1) selon la revendication 4,
**caractérisé par le fait qu'**
après une deuxième période de temps prédéterminée, un signal de désactivation (12) est envoyé à l'écran tactile (3) par l'unité de commande (9), ce par quoi l'écran tactile (3) est automatiquement désactivé.

10. Siège de véhicule selon la revendication 4, **caractérisé par le fait qu'** après une troisième période de temps prédéterminée, un signal de remise à l'état initial a été envoyé à l'écran tactile (3) par l'unité de commande (9), ce par quoi le panneau de commande (4) affiché en premier est affiché.

11. Siège de véhicule (1) selon l'une des revendications 1 à 10,
**caractérisé par le fait que**
l'écran tactile (3) est disposé dans ou sur un accoudoir (13) du siège de véhicule (1) ou dans une partie siège (14) du siège de véhicule (1).

12. Procédé comprenant les étapes consistant à
(a) activer un dispositif de commande de siège (2) par actionnement d'un bouton d'activation (7) et afficher un premier panneau de commande (4) choisi dans un groupe de différents panneaux de commande (4) sur un écran tactile (3), les panneaux de commande (4) étant disposés dans un ordre fixe et à chaque panneau de commande (4) uniquement un paramètre de commande étant associé ;
(b) utiliser le premier panneau de commande (4) ou choisir un deuxième panneau de commande (4) par au moins une première entrée d'utilisateur (5) et afficher le deuxième panneau de commande (4) sur l'écran tactile (3) ;
(c) modifier une valeur d'un paramètre de commande associé au premier ou au deuxième panneau de commande (4) par au moins une deuxième entrée d'utilisateur (6).

13. Siège de véhicule (1) comportant un dispositif de commande de siège (2), le dispositif de commande de siège (2) présentant un écran tactile (3) pour l'affichage de panneaux de commande (4) pour le réglage d'une valeur d'un paramètre de commande associé au panneau de commande respectif (4) et pour la saisie d'entrées d'utilisateur (5), une commutation entre des panneaux de commande (4) pouvant être effectuée au moyen d'au moins une première entrée d'utilisateur (5), un seul panneau de commande (4) à la fois étant affiché par l'écran tactile (3) et la valeur du paramètre de commande étant modifiable par au moins une deuxième entrée d'utilisateur (6) par l'intermédiaire d'au moins un bouton d'entrée (45, 46, 47) du siège de véhicule (1),
**caractérisé par le fait que**
les panneaux de commande (4) sont disposés dans un ordre fixe et à chaque panneau de commande (4) uniquement un paramètre de commande est associé.

14. Siège de véhicule (1) selon l'une des revendications 1 à 11 ou 13,
**caractérisé par le fait que**
la première entrée d'utilisateur (5) et la deuxième entrée d'utilisateur (6) sont différentes l'une de l'autre.
